# EUROPÄISCHE PATENTSCHRIFT

(11) **EP 1 272 072 B1**
(45) Veröffentlichungstag und Bekanntmachung des Hinweises auf die Patenterteilung: **20.04.2005**
(21) Anmeldenummer: 01913834.6
(22) Anmeldetag: 23.02.2001
(51) Int. Cl.: A47J 19/02

(54) **SAFTZENTRIFUGE**
JUICE CENTRIFUGE
CENTRIFUGEUSE A EXTRACTION DE JUS

(30) Priorität: 31.03.2000 DE 10016300
(43) Veröffentlichungstag der Anmeldung: 08.01.2003
(73) Patentinhaber: BSH Bosch und Siemens Hausgeräte GmbH, 81739 München (DE)
(72) Erfinder: MAZEJ, Stanislav, 3303 Gomilsko (SI); AREH, Marko, 2360 Radlje ob Dravi (SI); PESEC, Jurij, 3301 Petrovce (SI)
(86) Internationale Anmeldenummer: PCT/EP2001/002085
(87) Internationale Veröffentlichungsnummer: WO 2001/074209

(56) Entgegenhaltungen:
- DE-A- 2 061 415
- DE-A- 2 546 661
- DE-A- 4 428 922

## Beschreibung

Die Erfindung betrifft eine Saftzentrifuge mit einer rotierend angeordneten, eine Beschikkungsöffnung aufweisenden Trommel, einer mit dieser Trommel mitrotierenden Reibscheibe, einem in die Tromel einsetzbaren Siebkorb sowie einem Sammelraum für den ausgepreßten Saft.

Bei einer auf dem Markt befindlichen Saftzentrifuge ist in die rotierende Trommel, an deren Boden eine mitrotierende Reibscheibe angeordnet ist, ein Siebkorb eingesetzt. Dieser Siebkorb besitzt einen waagerecht abstehenden Umlaufrand, welcher die Trommel an ihrem oberen Trommelrand nach radial außen überragt. Dadurch wird beim Entsaften auch der Saft nach radial außen gegen das Gehäuse der Saftzentrifuge abgeschleudert und läuft dann an der Gehäusewand nach unten in den Sammelraum.

Aus DE 44 28 922 A1 ist eine Saftzentrifuge bekannt. In einer ersten Ausführungsform weist die Saftzentrifuge einen ringförmigen Rand auf, der die obere Kante einer Außentrommel umgreift. Dabei dient der Rand ausschließlich als Sitz für die Innentrommel und liegt auf einem oberen Bereich der Innentrommel auf, so dass kein Spalt vorhanden ist, über den ausgepresster Saft unterhalb des Randes ausgeschleudert werden könnte. In einer zweiten Ausführungsform ist ein ringförmiger Rand vorhanden, der nicht so ausgebildet, dass er den ausgepressten Saft dem Sammelraum zuführt. In dieser Ausführungsform kann der Saft weiterhin ungehindert an eine Rührschüssel oder einen Deckel spritzen und bei Abnehmen des Deckels kann es zu einem Vertropfen von Saft kommen.

Der Erfindung liegt die Aufgabe zugrunde, eine Saftzentrifuge der eingangs beschriebenen Art so weiterzubilden, daß der ausgepreßte Saft gezielt zum Sammelraum abgeführt wird.

Die Lösung der gestellten Aufgabe gelingt nach der Erfindung durch die Merkmale des Anspruchs 1. Durch die Ableiteinrichtung wird der aus der Trommel austretende Saft gezielt zum Sammelraum hin umgelenkt. Hierdurch ist der Reinigungsaufwand der Saftzentrifuge nach dem Entsaftungsvorgang deutlich vermindert.

Besonders einfach und kostengünstig herstellbar ist die Ableiteinrichtung, wenn nach einer bevorzugten Ausführungsform des Gegenstandes der Erfindung vorgesehen ist, daß die Ableiteinrichtung in Art einer Abdeckung mit einem schürzenartigen, in den Sammelraum gerichteten Fortsatz ausgebildet ist.

Besonders sicher und zielgerichtet ist der ausgepreßte Saft in den Sammelraum umgelenkt, wenn nach einer nächsten vorteilhaften Ausgestaltung des Gegenstandes der Erfindung vorgesehen ist, daß der Fortsatz sich mit seinem freien Ende zumindest annähernd bis auf die halbe Höhe der Trommel erstreckt.

Dadurch, daß der Fortsatz einen Zwischenwinkel zur Abdeckung von großer 90° aufweist, wird infolge der einwirkenden Zentrifugalkraft das Abführen des Saftes aus der Trommel noch besonders begünstigt.

Durch die Abtropfkante am freien Ende des Fortsatzes ist ein rasches Abtropfen des ausgepreßten Saftes von dem als Prellwand dienenden Fortsatzes gewährleistet.

Eine auch hohen Kräften standhaltende drehfeste Ankoppelung des Siebkorbes an die Trommel ist dadurch gegeben, daß der Siebkorb im Bereich des Kappenrandes mindestens eine Durchstecköffnung aufweist, mit der er auf einen am Trommelrand angeordneten und über diesen axial hinausstehenden Zapfen aufsteckbar ist.

Anhand eines in der Zeichnung dargestellten Ausführungsbeispieles wird die Erfindung nachfolgend noch näher erläutert. Es zeigt:

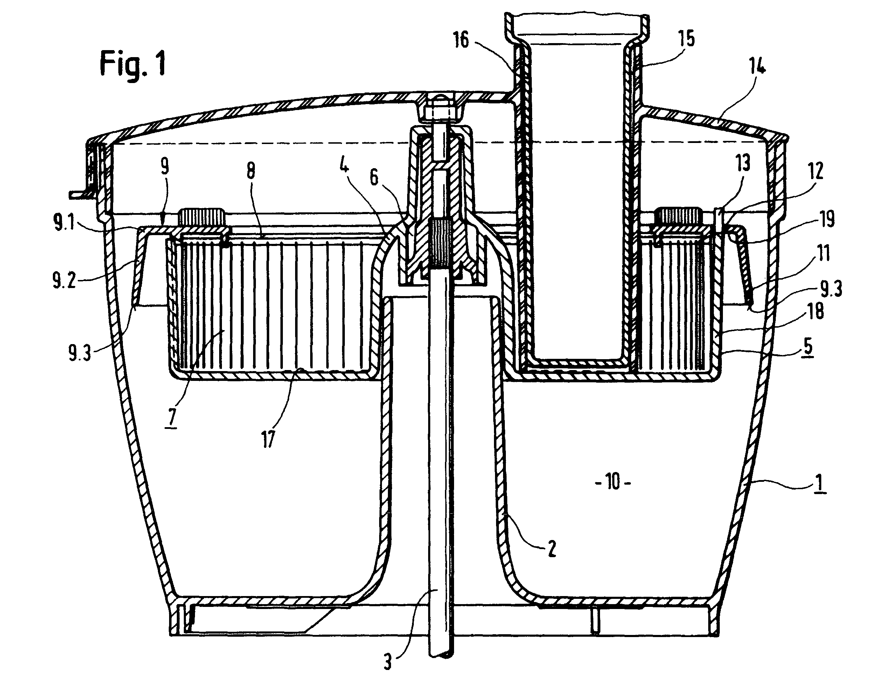

- Fig. 1: eine in die Rührschüssel einer Küchenmaschine eingesetzte Saftzentrifuge im Schnitt

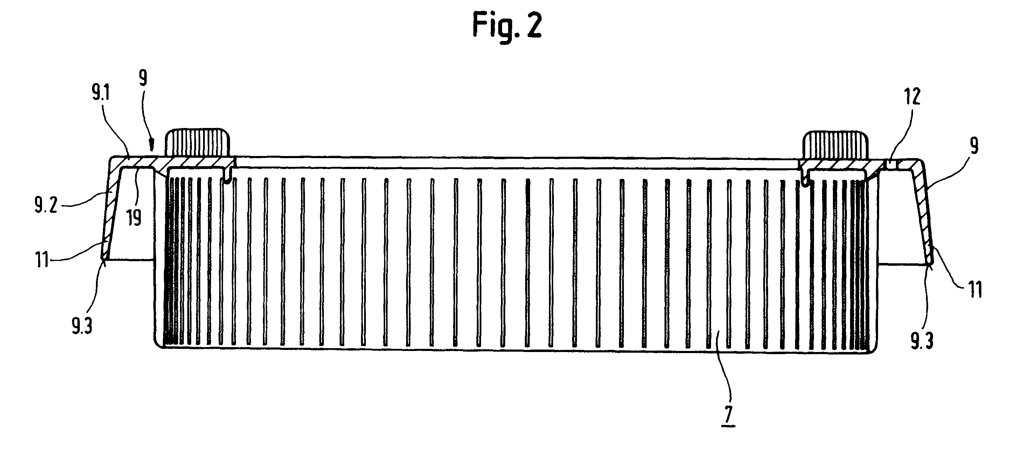

- Fig. 2: einen Siebkorb für die Saftzentrifuge nach Fig. 1.

Mit 1 ist die Rührschüssel einer Küchenmaschine bezeichnet, die in ihrer Mitte einen rohrartigen Stutzen 2 aufweist, durch den eine unterhalb des Bodens der Rührschüssel von dem Antriebsmotor der Küchenmaschine angetriebene Abtriebswelle 3 nach oben herausgeführt ist. Auf das aus dem Stutzen 2 herausragende mit einer Außenriffelung versehene Ende der Abtriebswelle 3 ist eine mit einem Nabenteil 4 versehene Trommel 5 aufgesteckt. Hierzu weist das Nabenteil 4 in einer Aufstecköffnung 6 eine mit der Außenriffelung der Abtriebswelle 3 zusammenpassende Innenriffelung auf. Durch die Riffelung wird eine drehfeste Ankoppelung der Trommel an die Antriebswelle 3 erreicht.

In die Trommel 5 ist ein Siebkorb 7 eingesetzt, der mit einer den oberen Trommelrand 8 übergreifenden, zu dem am Boden der Rührschüssel 1 vorgesehenen Sammelraum 10 weisenden Ableiteinrichtung 9 versehen ist. Die Ableiteinrichtung 9 ist einstückig an den Siebkorb 7 angeformt und ist wie dieser aus Kunststoffspritzguß gebildet. Die Ableiteinrichtung 9 weist eine auf den Siebkorb 7 aufsetzbare, kreisringförmige Abdeckung 9.1 und einen einstückig daran angeformten Fortsatz 9.2 auf, dessen freies in den Sammelraum 10 ragendes Ende 11 eine Abtropfkante 9.3 besitzt.

Der schürzenartige Fortsatz 9.2 schließt zur Abdeckung 9.1 einen Zwischenwinkel α großer 90° ein, so daß sich der Fortsatz 9.2 zu seinem freien Ende 11 hin konisch erweitert.

Im Bereich der Abdeckung 9.1 ist mindestens eine Durchstecköffnung 12 vorgesehen. Mit dieser Durchstecköffnung 12 ist der Siebkorb 7 auf einen vom Trommelrand 8 nach oben abstehenden Zapfen 13 aufgesteckt. Hierdurch ist der Siebkorb 7 formschlüssig an die Trommel 5 angekoppelt und wird auch bei hohen Gegenkräften von der Trommel 5 bei deren Rotation mitgenommen.

Auf die Rührschüssel 1 ist ein Deckel 14 aufgesetzt, der einen Zuführschacht 15 enthält. In diesen Zuführschacht eingebrachtes zu entsaftendes Gut wird mittels eines Stopfers 16 gegen eine am Grund der Trommel 5 angeordnete und mit dieser mitrotierende Reibscheibe 17 gepreßt und von dieser zerkleinert. Der beim Zerkleinerungsvorgang frei werdende Saft wird infolge der Zentrifugalkraft nach radial außen gegen die Trommelwand 18 geleitet und dann an dieser nach oben geführt. Dies geschieht ebenfalls unter dem Einfluß der Zentrifugalkraft. Dabei ist es von Vorteil, wenn die Trommelwand 18 zu ihrem oberen Trommelrand 8 hin konisch erweitert ist, da dann die Zentrifugalkraft besser zur Wirkung kommt. Der an der Trommelwand 18 nach oben geleitete Saft trifft dann auf der waagerecht angeordneten Abdeckung 9.1 der Ableiteinrichtung 9 und gelangt schließlich zu dem zum.Sammelraum 10 weisenden Fortsatz 9.2 der Ableiteinrichtung 9. Infolge des konischen Verlaufes des Fortsatzes 9.2 in diesem Bereich wird der Saft wiederum durch die Einwirkung der Zentrifugalkraft zum freien Ende 11 des Fortsatzes 9.2 gefördert und von dort in den Sammelraum 10 abgeschleudert.

Durch die Ableiteinrichtung 9 wird insgesamt ein unkontrolliertes Abschleudern des ausgepreßten Saftes verhindert. wodurch ein starkes Verschmutzen der Rührschüsselwand vermieden wird. Der Deckel 14 wird von einer Beaufschlagung durch den ausgepreßten Saft vollkommen freigehalten. Damit kann es beim Abnehmen des Deckels 14 von der Rührschüssel 1 auch nicht mehr zu einem Vertropfen von Saft kommen. Besteht der Deckel 14 aus durchsichtigem Material bleibt während des Entsaftungsvorganges die Sicht in die Rührschüssel 1 voll erhalten, da kein Saft auf den Deckel 14 spritzt.

## Patentansprüche

1. Saftzentrifuge, mit einer rotierend angeordneten eine Beschickungsöffnung aufweisenden Trommel (5), einer mit dieser Trommel (5) mitrotierenden Reibscheibe (17), einem in die Trommel (5) einsetzbaren Korb (7), einer den freien Rand der Trommel (5) übergreifenden, den ausgepressten Saft ableitenden Ableiteinrichtung (9), sowie einem Sammelraum (10) für den ausgepreßten Saft, **dadurch gekennzeichnet, daß** der Korb (7) als Siebkorb ausgebildet ist und die Ableiteinrichtung (9) den ausgepreßten Saft nach unten dem Sammelraum (10) zuführt.

2. Saftzentrifuge nach Anspruch 1, **dadurch gekennzeichnet, daß** die Ableiteinrichtung (9) in Art einer Abdeckung (9.1) mit einem schürzenartigen in den Sammelraum (10) gerichteten Fortsatz (9.2) ausgebildet ist.

3. Saftzentrifuge nach Anspruch 2, **dadurch gekennzeichnet, daß** der Fortsatz (9.2) sich mit seinem freien Ende (11) zumindest annähernd bis auf die halbe Höhe der Trommel (9) erstreckt.

4. Saftzentrifuge nach Anspruch 2 oder 3, **dadurch gekennzeichnet, daß** der Fortsatz (9.2) einen Zwischenwinkel großer 90° zur Abdeckung (9.1) einschließt.

5. Saftzentrifuge nach Anspruch 2 bis 4, **dadurch gekennzeichnet, daß** der Fortsatz (9.2) eine Abtropfkante (9.3) aufweist.

6. Saftzentrifuge nach Anspruch 1 bis 5, **dadurch gekennzeichnet, daß** die Abdekkung (9.1) am Siebkorb (7) vorgesehen ist.

7. Saftzentrifuge nach Anspruch 5, **dadurch gekennzeichnet, daß** die Abdeckung (9.1), der Siebkorb (7) und der Fortsatz (9.2) einstückig ausgebildet sind.

8. Saftzentrifuge nach einem der Ansprüche 1 bis 7, **dadurch gekennzeichnet, daß** die Abdeckung (9.1) verdrehsicher formschlüssig am Siebkorb (7) gehaltert ist.

9. Saftzentrifuge nach einem der vorhergehenden Ansprüche, **dadurch gekennzeichnet, daß** der Siebkorb (7) im Bereich des Kappenrandes (9) mindestens eine Durchstecköffnung (12) aufweist, mit der er auf einen am Trommelrand (8) angeordneten und über diesen axial hinausstehenden Zapfen (13) aufsteckbar ist.

## Claims

1. Juice centrifuge with a rotatably arranged drum (5) having a charging opening, a friction disc (17) co-rotating with this drum (5), a basket (7) insertable into the drum (5), a drain device (9) engaging over the free edge of the drum (5) and draining the pressed-out juice and a collecting space (10) for the pressed-out juice, **characterised in that** the basket (7) is constructed as a sieve basket and the drain device (9) feeds the pressed-out juice downwardly to the collecting space (10).

2. Juice centrifuge according to claim 1, **characterised in that** the drain device (9) is constructed in the manner of a cover (9.1) with a skirt-like extension (9.2) directed into the collecting space (10).

3. Juice centrifuge according to claim 2, **characterised in that** the extension (9.2) extends by the free end (11) thereof at least to half the height of the drum (5).

4. Juice centrifuge according to claim 2 or 3, **characterised in that** the extension (9.2) includes an intermediate angle greater than 90° relative to the cover (9.1).

5. Juice centrifuge according to claim 2 to 4, **characterised in that** the extension (9.2) has a drip edge (9.3).

6. Juice centrifuge according to claim 1 to 5, **characterised in that** the cover (9.1) is provided at the sieve basket (7).

7. Juice centrifuge according to claim 5, **characterised in that** the cover (9.1), the sieve basket (7) and the extension (9.2) are of integral construction.

8. Juice centrifuge according to one of claims 1 to 7, **characterised in that** the cover (9.1) is mechanically positively mounted at the sieve basket (7) to be secure against rotation.

9. Juice centrifuge according to one of the preceding claims, **characterised in that** the sieve basket (7) has in the region of the cover (9.1) at least one plug opening (12) by which it can be plugged onto a spigot (13) which is arranged at the drum edge (8) and projects out axially above this.

## Revendications

1. Centrifugeuse à extraction de jus, comportant un tambour (5) disposé de façon rotative et présentant une porte d'alimentation, un disque de friction (17) tournant en même temps que ce tambour (5), un récipient (7) pouvant être inséré dans le tambour (5), un système de déviation (9) recouvrant l'extrémité libre du tambour (5) et déviant le jus pressé, ainsi qu'un espace collecteur (10) pour le jus pressé, **caractérisé en ce que** le récipient (7) est conçu comme un récipient filtrant et le système de déviation (9) amène le jus pressé vers le bas à l'espace colleteur (10).

2. Centrifugeuse à extraction de jus selon la revendication 1, **caractérisé en ce que** le système de déviation (9) est conçu à la façon d'un recouvrement (9.1) avec un prolongement (9.2) dirigé à la façon d'un tablier dans l'espace collecteur (10).

3. Centrifugeuse à extraction de jus selon la revendication 2, **caractérisé en ce que** le prolongement (9.2) s'étend avec son extrémité (11) libre au moins jusqu'à la mi-hauteur du tambour (9).

4. Centrifugeuse à extraction de jus selon la revendication 2 ou 3, **caractérisé en ce que** le prolongement (9.2) forme un angle intermédiaire supérieur à 90° par rapport au recouvrement (9.1).

5. Centrifugeuse à extraction de jus selon les revendications 2 à 4, **caractérisé en ce que** le prolongement (9.2) présente une arête d'égouttement (9.3).

6. Centrifugeuse à extraction de jus selon les revendications 1 à 5, **caractérisé en ce que** le recouvrement (9.1) est prévu sur le récipient filtrant (7).

7. Centrifugeuse à extraction de jus selon la revendication 5, **caractérisé en ce que** le recouvrement (9.1), le récipient filtrant (7) et le prolongement (9.2) sont conçus d'une seule pièce.

8. Centrifugeuse à extraction de jus selon l'une quelconque des revendications 1 à 7, **caractérisé en ce que** le recouvrement (9.1) est maintenu sur le récipient filtrant (7) de façon résistante à la rotation et par conjugaison de forme.

9. Centrifugeuse à extraction de jus selon l'une quelconque des revendications précédentes, **caractérisé en ce que** le récipient filtrant (7) présente dans la zone du recouvrement (9.1) au moins une ouverture de traversée (12) avec laquelle il peut être emboîté sur un tenon (13) disposé sur le bord du tambour (8) et débordant axialement de ce bord vers l'extérieur.
